# EUROPEAN PATENT SPECIFICATION

(11) **EP 2 723 165 B1**
(45) Date of publication and mention of the grant of the patent: **22.07.2015**
(21) Application number: 12730799.9
(22) Date of filing: 18.06.2012
(51) Int. Cl.: A01K 1/00

(54) **A PARTITION FOR AN ANIMAL STALL**
TRENNWAND FÜR TIERSTALL
SÉPARATION POUR UNE STALLE D'ANIMAL

(30) Priority: 21.06.2011 GB 201110424
(43) Date of publication of application: 30.04.2014
(73) Proprietor: J Wilson Agricultural Ltd, Coleraine, Londonderry BT51 4ED (GB)
(72) Inventor: WILSON, Andrew, Coleraine Co. Londonderry BT51 4ED (GB)
(74) Representative: Waller, Stephen
(86) International application number: PCT/EP2012/002573
(87) International publication number: WO 2012/175188

(56) References cited:
- WO-A1-2010/133226
- DE-U1-202007 008 820
- GB-A- 2 470 425
- GB-A- 2 471 707
- US-A- 5 975 026
- US-B1- 6 467 434

## Description

This invention relates to a partition for an animal stall.

It is known to employ partitions to define and separate individual cattle stalls in a cattle shed. Such partitions typically comprise tubular steel rails, typically arranged in a loop defining substantially horizontal upper and lower rails extending transverse to a row of stalls to divide individual stalls from one another. The upper and lower rails are typically joined at a front region of the partition to define a closed loop. The partitions are generally mounted on the floor of the cow stalls or on a rear wall behind the stalls. In use, cows tend to lie against the sides of the partitions, particularly the lower rails thereof, when in a stall and it is common for the hard steel lower rails of the partitions to cause contusions or other injuries to the cow. It is also known of an animal to slip and fall against the sides of the partitions, particularly against the lower rail of a partition. As well as causing potential injury to the cow, a cow laying or falling against the side of a partition can damage the partition and/or its mountings.

Known animal stall partitions are disclosed in GB 2 470 425, GB 2 471 707 and US 5 975 026.

According to the present invention there is provided a partition for an animal stall as claimed in claim 1.

Said non-metallic material may comprise high density polyethylene (HDPE). Alternatively said non-metallic material may comprise a composite material, such as fibre reinforced plastic.

Preferably the remainder of the partition other than said non-metallic portion, preferably including the upper rail and portions of the lower rail adjoining said non-metallic portion is formed from a metal pipe, preferably steel pipe. Said remainder of the partition may be formed from a single length of steel pipe.

According to a further aspect of the present invention there is provided a row of animal stalls as claimed in claim 9

Embodiments of the present invention will now be described, by way of example only, with reference to the accompanying drawings, in which :-
Figure 1 is a perspective view of a row of cow stalls incorporating partitions in accordance with a first embodiment of the present invention;
Figure 2 is a side view of the cow stalls of Figure 1;
Figure 3 is a side view of a cow stall incorporating a modified partition in accordance with a further embodiment of the present invention;
Figure 4 is a perspective view of two back to back rows of cow stalls incorporating partitions in accordance with a further embodiment of the present invention;
Figure 5 is a side view of the cow stalls of Figure 4;
Figure 6 is a side view of a modified partition in accordance with a further embodiment of the present invention;
Figure 7 is a side view of a modified partition in accordance with a further embodiment of the present invention;
Figure 8 is a side view of a modified partition in accordance with a further embodiment of the present invention;
Figure 9 is a perspective view of a row of cow stalls incorporating partitions in accordance with a further embodiment of the present invention;
Figure 10 is a side view of the cow stalls of Figure 9;
Figure 11 is a detailed sectional view on line A-A of Figure 10;
Figure 12 is a side view of the cow stalls of Figure 9 showing the lower rails in an extended configuration;
Figure 13 is a detailed sectional view on line B-B of Figure 12;
Figure 14 is a perspective view of a row of cow stalls incorporating partitions in accordance with a further embodiment of the present invention;
Figure 15 is a side view of the row of stalls of Figure 14;
Figure 16 is a detailed sectional view on line A-A of Figure 15;
Figure 17 is a side view of the row of stalls of Figure 14 showing the lower rails in an extended configuration;
Figure 18 is a detailed sectional view on line B-B of Figure 17;
Figure 19 is a perspective view of a row of stalls incorporating partitions in accordance with a further embodiment of the present invention;
Figure 20 is a side view of the row of stalls of Figure 19;
Figure 21 is a perspective view of a row of stalls incorporating partitions in accordance with a yet further embodiment of the present invention; and
Figure 22 is a side view of the row of stalls of Figure 21.

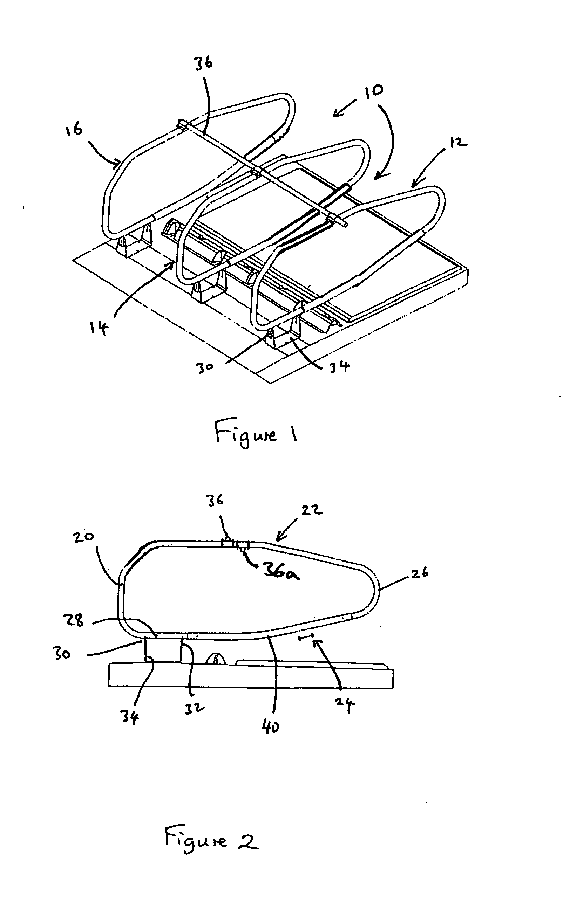

A row of cow stalls 10 incorporating partitions 12,14,16 in accordance with a first embodiment of the present invention is illustrated in Figure 1. Each partition 12,14,16 comprises a continuous loop formed from tubular pipework defining a substantially vertical rear rail 20, an upper rail 22 and a lower rail 24. The upper rail 22 and lower rail 24 are joined at a forward end of the partition by a curved forward portion 26 to define a closed loop. The upper rail 22, rear rail 20 and forward portion 26 and end portions of the lower rail 24 are formed from a metallic material, more specifically steel pipe. Such may be formed from stainless steel or alternatively mild or galvanised steel.

The upper rail 22 of each partition comprises a substantially horizontal rear part and a downwardly inclined front part. Likewise the lower rail 24 comprises a substantially horizontal rear part and an upwardly inclined front part, the front parts of the upper and lower rails being joined by said curved forward portion 26.

The rear part of the lower rail defines a mounting portion 28 provided with a pair of depending spaced apart vertical mounting plates 30,32 extending downwardly from a lower side thereof, said mounting plates 30,32 being attachable to a mounting bracket 34 secured to the floor of the cow stall. The mounting plates 30,32 and mounting bracket 34 may be provided with a plurality of vertically spaced apertures to enable the height of the partition to be varied by inserting fasteners through selected aligned pairs of apertures in the mounting plates 30,32 and bracket 34.

A horizontally arranged neck bar 36 is clamped to the upper rails 22 of adjacent partitions 12,14,16 to extend transverse to the partitions, as is known in the art. As shown in Figure 2, the neck bar may be attached above the upper rail 22 (in the position shown as 36 in Figure 2) or below the upper rail 22 (in the position shown as 36a in Figure 2).

When a cow lies down within its stall, it tends to lie against a lower rail of one of the partitions on either side of the stall. With known partitions formed entirely from steel pipe, the hard surface of the lower rail and rigidity of the partition can lead to contusions or other injuries to the cow should the cow lie against or fall against the lower rail.

To alleviate this problem, in accordance with the present invention, a portion 40 of the lower rail 24 between the mounting portion 28 and the curved forward portion 26 is formed from a resilient non-metallic material. In the embodiments illustrated in the drawings, such non-metallic portion 40 of the lower rail 24 comprises a tube formed from a resilient plastic or polymeric material, such as high density polyethylene (HDPE), or a composite material, such as glass reinforced plastic (GRP).

In the embodiment shown in Figures 1 and 2, the diameter of the non-metallic portion 40 of the lower rail 24 is slightly greater than that of the steel pipe forming the remainder of the partition so that the non-metallic portion 40 is a sliding fit over the adjoining ends of the steel parts of the partition.

Fasteners may be inserted through at least one of the overlapping regions of the metallic and non-metallic portions of the lower rail 24. However, it is preferred that at least one end of the non-metallic portion 40 be free to slide axially with respect to the adjoining metallic portion of the lower rail 24 so that the non-metallic portion 40 can flex and be deflected laterally under the weight of a cow leaning against the lower rail 24. Such flexure of the 24 lower rail 24 reduces the risk of injury to the cow and/or damage to the partition, in particular reducing stress on the fixings between the mounting bracket and the floor of the stall when a cow leans against the lower rail of the partition.

The provision of a flexible portion of the partition at cow resting level removes the problem of rubbed metal and/or contusions and swollen lumps behind the cow's rib, otherwise caused due to contact with a steel rail.

Through the use of a non-metallic lower rail portion 40, the part of the partition usually prone to corrosion will be corrosion proof and can be easily replaced without the need to replace the whole partition. The flexibility comes from a non-metallic portion of the lower rail, preferably formed by a HDPE, or composite tube, that slides over the adjoining regions of the steel tube forming the remainder of the partition such that the non-metallic portion can slide over the steel tube to give flexibility without creating a force that would break the non-metallic portion of the lower rail.

The overlapping join between the non-metallic portion 40 of the lower rail 24 and the remaining steel part of the lower rail 24 provides a degree of flexibility in the partition. The level of flex can be controlled by varying the material choice, outside diameter and thickness of wall of the non-metallic portion 40 of the lower rail. The level of flex can also be determined by altering the length of non-metallic portion 40. A longer non-metallic portion 40 will create more flex and shorter will create less.

The use of a resilient non-metallic material, such as a plastic/composite tube, means that this part of the structure acts as a damper or shock absorber, vastly reducing stress on the floor fixings of the partition, making it possible to use fixings that weigh less and were impossible to use before. The lightweight non-metallic portion 40 of the lower rail 24 also means that the entire partition weighs less than prior art partitions formed entirely from metal. This makes it a much more efficient structure.

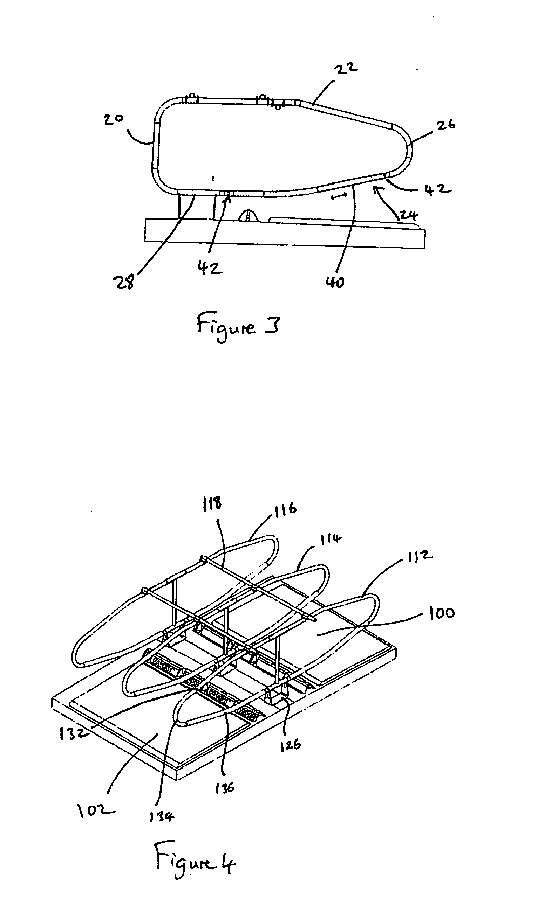

An alternative embodiment is illustrated in Figure 3, wherein the overlapping regions of the metallic 40 and non-metallic portions 42 of the lower rail 24 are modified. In such embodiment the overlapping regions 42 of the steel part are swaged to a reduced diameter and the non-metallic portion 40 has substantially the same tube diameter as the remainder of the partition.

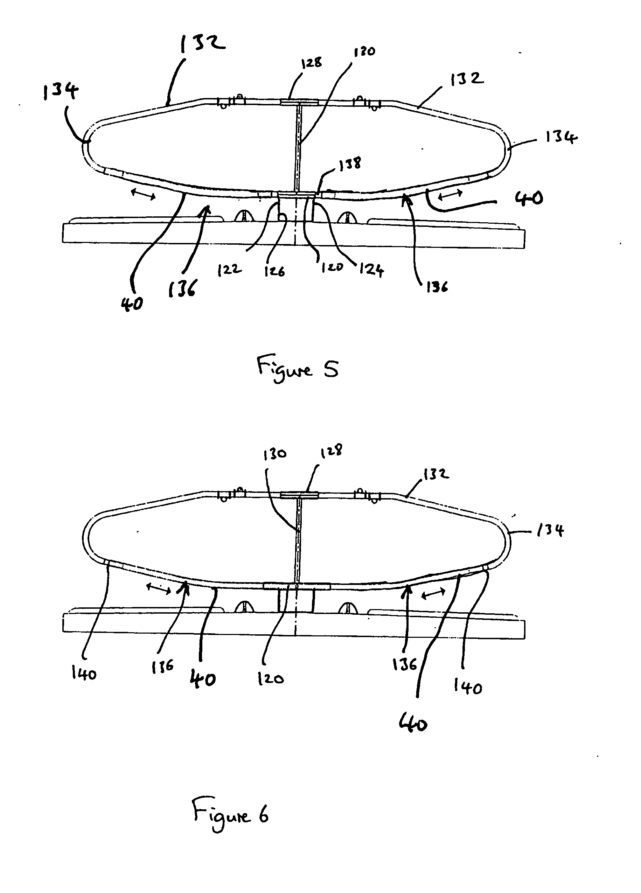

Figures 4 and 5 illustrate a further embodiment of the invention wherein the partitions 112,114,116 are adapted for use in oppositely facing rows of stalls 100,102 arranged back to back, oppositely extending upper and lower rails of respective pairs of partitions lying in respective common vertical planes extending from a common central region between each pair of partitions to define the oppositely facing rows of stalls. Again neck bars 118 are coupled to the upper rails to extend transverse to the partitions 112,114,116, either above or below each upper rail by means of suitable clamps, as is known in the art.

A central region of each pair of back to back partitions comprises a steel lower link pipe 120 having a pair of depending spaced apart vertical mounting plates 122,124 extending downwardly from a lower side thereof, said mounting plates 122,124 being attachable to a mounting bracket 126 secured to the floor of the cow stalls between respective facing rows of stalls 100,102. A steel upper link pipe 128 is located above the lower link pipe 120, a vertical pipe section 130 extending between the upper and lower link pipes 120,128 of each pair of partitions defining a central support post thereof.

Each partition comprises an upper rail 132 and an integrally formed curved forward portion 134, provided on a respective side of the central region of each pair of partitions, formed from respective steel pipes. An inner end of each upper rail 132 is received within a respective end of the upper link pipe 128. The upper rails 132 of each partition pair may be integrally formed from a single pipe such that the upper rails 132 pass through the upper link pipe 128, or may comprise separate pipes having respective ends received within the upper link pipe 128. The upper rails 132 may be secured in the upper link pipe 128 by welding or by suitable fastening means, such as a bolt or screw passing through the overlapping regions of the upper rails 132 and upper link pipe 128. The upper link pipe 128 and/or the lower link pipe 120 may be formed in two symmetrical halves to enable the respective link pipe 120,128 to be clamped around the ends of the adjoining rails.

A portion 40 of the lower rail 136 on each side of the central region is formed from a non-metallic tubular material, for example a plastic tube, such as HDPE, or a composite tube, such as GRP. In the embodiment shown in Figure 4 and 5, outer ends of each non-metallic lower rail portion 40 are dimensioned to fit over an adjoining end of the steel pipe forming the upper rail 132 and curved forward portion 134. Inner ends of each non-metallic lower rail portion 40 are slid over steel pipe sections defining the inner ends of each lower rail 136 or respective ends of the lower link pipe 120. In the embodiment shown in Figure 5, the inners ends of the lower rails 136 of each pair of partitions are defined by a single steel pipe 138 passing through the lower link pipe 120.

In an alternative embodiment, shown in Figure 6, each non-metallic lower rail portion 40 has substantially the same diameter as the steel tube upper rail 132, outer ends of the non-metallic lower rail portions 40 sliding over respective swaged reduced diameter portions 140 of the steel pipe forming the lower ends of the respective curved forward portions 134 of the partition. Inner ends of the non-metallic lower rail portions 40 are received within the lower link pipe 120 to be fitted therein in overlapping relationship with the lower link pipe 120.

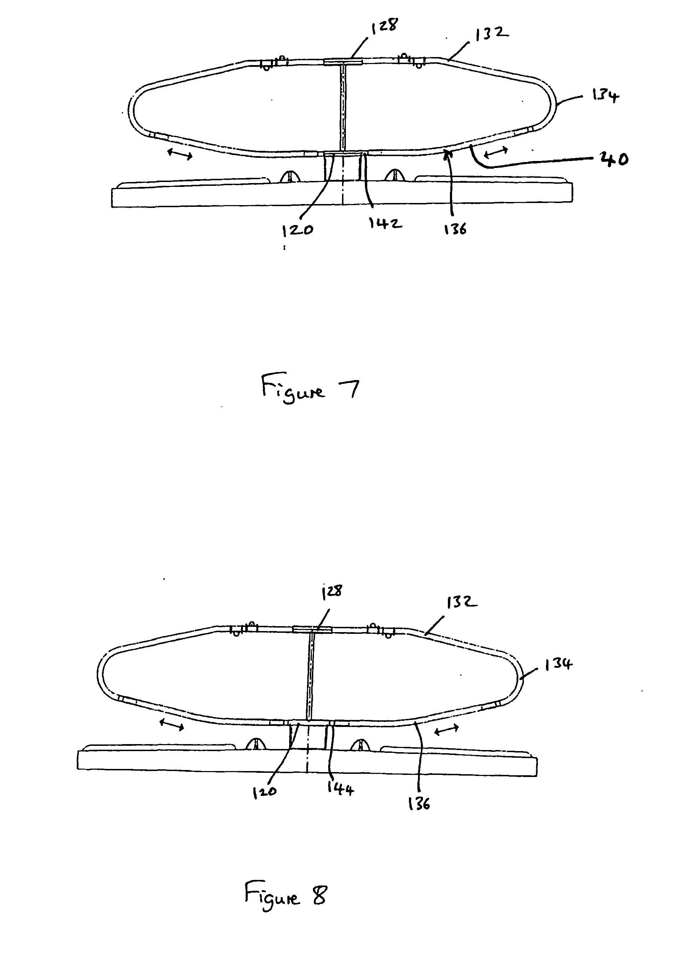

Figure 7 illustrates a further modification wherein the inner ends of the non-metallic lower rail portions 40 are received in overlapping relationship with a reduced diameter steel pipe 142 inserted into, or through, the lower link pipe 120.

Yet a further modified embodiment is illustrated in Figure 8, wherein the lower link pipe 120 comprises a steel tube having swaged reduced diameter ends 144 adapted to be received within respective adjoining ends of the non-metallic lower rail portions 40.

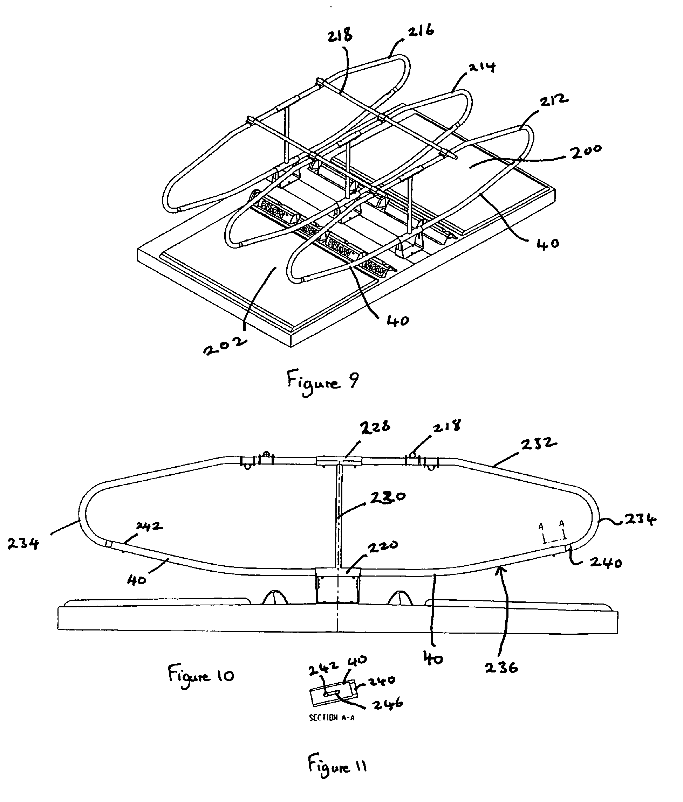

A row of back to back cattle stalls incorporating partitions in accordance with a further embodiment of the present invention are illustrated in Figures 9 to 13.

The upper and lower rails of the partitions 212,214,216 of each row of stalls 200,202 are clamped to respective central upright posts 230 by upper and lower link pipes 220,228. The upper link pipe 228 comprises an axially split tube within which the inner ends of the upper rails 232 are retained. The lower link pipe 220 comprising a tube within which respective adjoining ends of the non-metallic portions 40 of the lower rails 236 are slidingly received. As with the previous embodiments, the lower rail 236 of each partition 212,214,216 includes a non-metallic portion 40 mounted in telescopic sliding contact with the remainder of the respective partition.

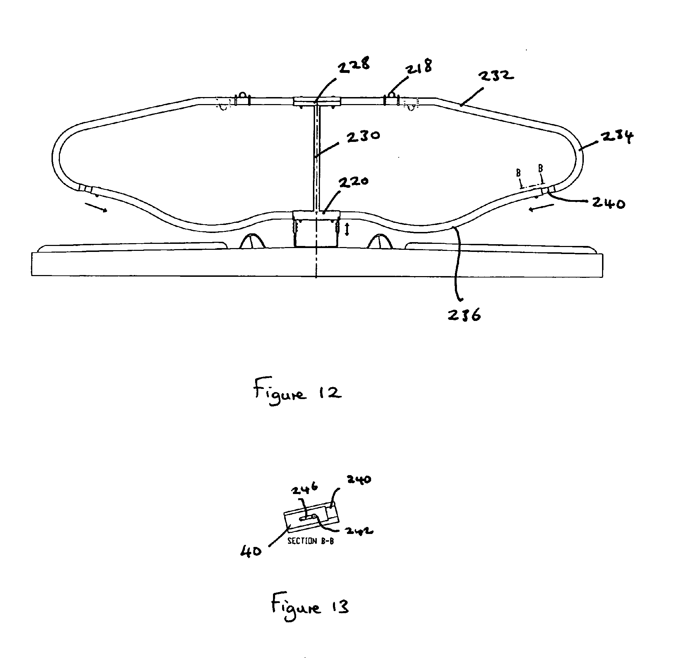

The outer end of each non-metallic portion 40 of each lower rail 236 is telescopically received over a swaged reduced diameter portion 240 of the adjacent curved forward portion 234. As shown in Figure 11, a bolt 242 is passed through elongated axially extending slots 246 in the outer end of each non-metallic portion 40 and through corresponding apertures in the swaged reduced diameter portion 240 of the adjoining curved forward portion 234. This allows the shape and vertical position of the lower rail 236 of each partition to be adjusted by adjusting the overlap between the non-metallic portion 40 thereof and the adjoining curved forward portion 234 between a first position, shown in Figure 11, wherein the bolt 242 abuts against a first end of the elongate slot 246 in the respective non-metallic portion 40, and a second position, shown in Figure 13, wherein the bolt 242 abuts against a second end of the slot 246, opposite said first end, causing the non-metallic portion 40 to bow downwardly, as illustrated in Figure 12 to change the shape and vertical position of the lower rail 236.

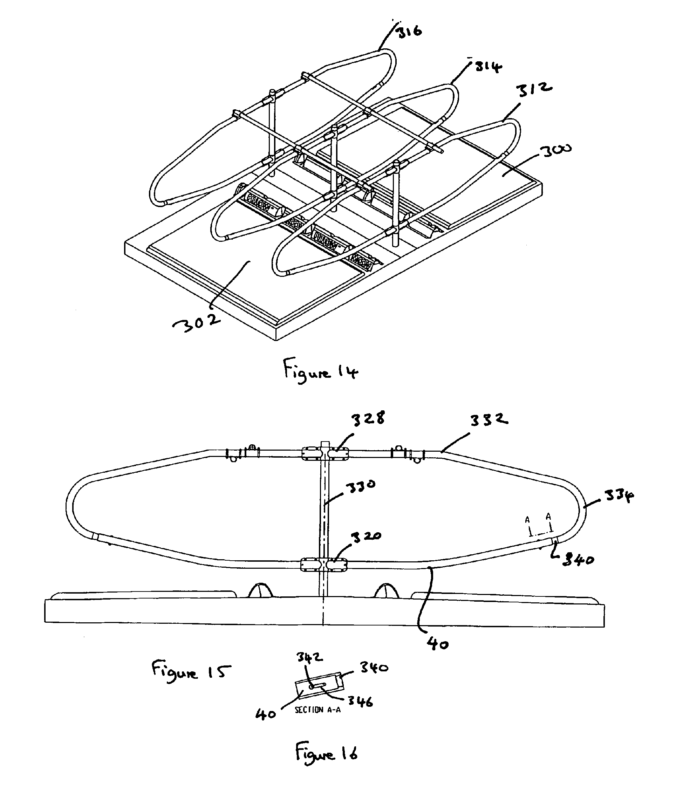

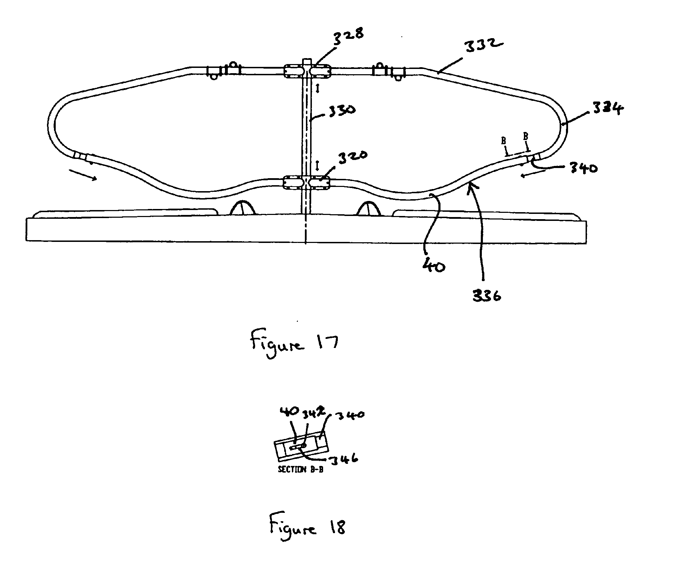

The flexibility of the non-metallic portion of each partition may also be utilised to enable the vertical position of both the upper and lower rails to be adjusted. In the embodiment shown in Figures 14 to 18, the upper and lower link pipes 320,328 by means of which the upper and lower rails 332,336 of the partitions are attached to the respective upright central post 330 of each pair of partitions 312,314,316 defining the two back to back rows of stalls 300,302 are mounted on the post 330 to be slid up and down the post 330 before being clamped to the post 330 in a desired position. As well as enabling the vertical position of both the upper and lower rails 332,336 to be adjusted, the flexibility of the non-metallic portion 40 of the lower rails 336 enables the spacing between the upper and lower link pipes 320,328, and thus the upper and lower rails 332,336, to be adjusted. As with the embodiment shown in Figures 14 to 18, the overlap between the non-metallic portions 40 of each lower rail 336 and the adjoining portion of the respective curved forward portion 334 of each partition 312,314,316 can be adjusted and set by virtue of the slotted aperture 346 and cooperating bolt 342 to adjust the shape and vertical position of the lower rail 336 of each partition, as illustrated in Figures 15 to 18.

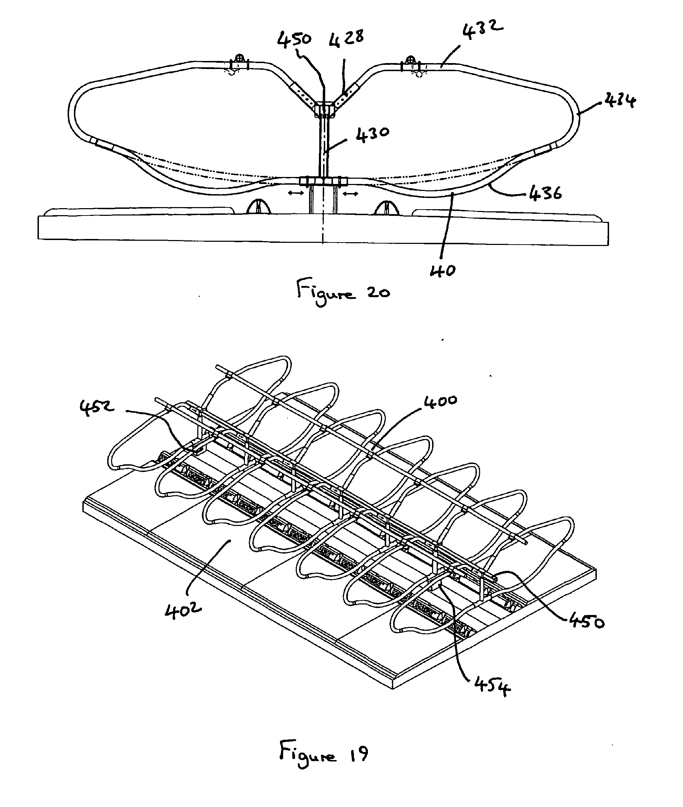

In a further embodiment shown in Figures 19 and 20, the upper link pipe 428 comprises outwardly and upwardly extending mounting portions within which the inner ends of respective upper rails 432 are received. The position of the upper rail 432 of each partition can be adjusted by adjusting the distance to which the inner end of each upper rail 432 is inserted into the respective upper link pipe 428, the flexibility of the non-metallic portion 40 of the lower rail 436 and the telescopic join between the non-metallic portion 40 of the lower rail 436 and the curved forward portion 434 of each partition again facilitating such adjustment.

In the embodiment shown in Figures 19 and 20, the upper link pipe 428 and central upright post 430 of each pair of partitions defining the two rows 400,402 of animal stalls is linked to the upper link pipes 428 and upright posts 430 of the other partitions in the row of stall by an elongate support beam 450 extending transverse to the partitions between the rows 400,402 of stalls. The support beam 450 links the partitions together and supports the partitions via ground engaging support brackets 452,454 coupled to respective upright posts 430 of selected spaced apart partitions. The low weight of the partitions, by virtue of the non-metallic portions 40 of the lower rails 436, in combination with the use of a common central support beam 450, enables the row of partitions defining said row of stalls 400,402 to be supported by just a pair of spaced ground engaging support brackets 452,454, instead of requiring a separate ground support for each pair of back to back partitions, facilitating installation of the partitions.

The mounting of the upper link pipe 428 of each pair of partitions on the elongate support beam 450 allows each upper link pipe 428 to be slid up and down the support beam 450, thereby permitting adjustment of the spacing between the partitions in each row of stalls and thus enabling adjustment of the width of each stall.

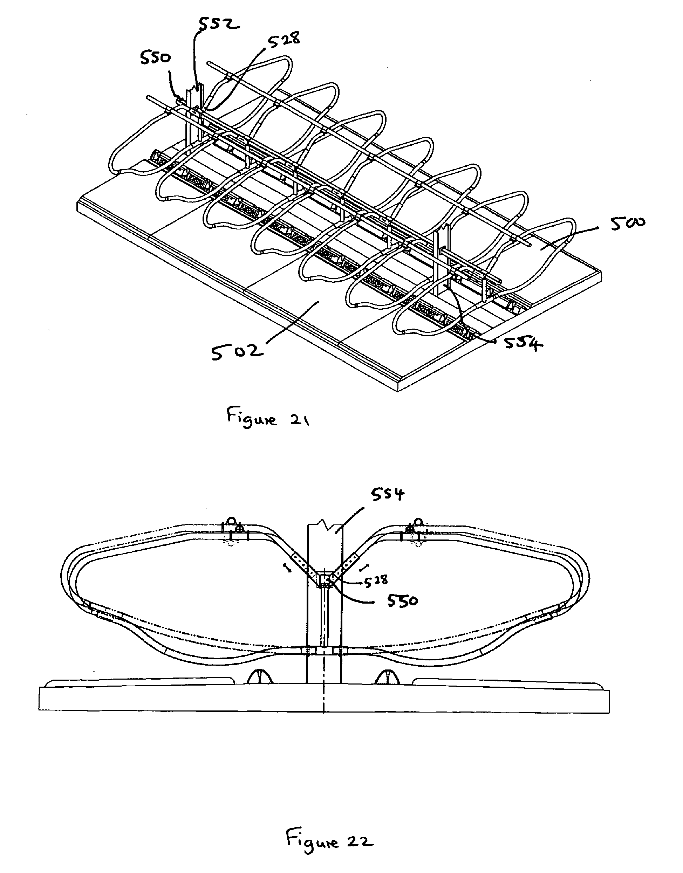

In an alternative embodiment, shown in Figures 21 and 22, the partitions defining the two rows of stalls 500,502 are linked by a common central support beam 550 mounted on a pair of spaced vertical support members 552,554. Such support members 552,554 may comprise structural members, such of roof support beams, of the building within which the animal stalls are located. Again, the width of each stall can be adjusted by adjusting the axial position of each upper link pipe 528 on the support beam 450.

The invention is not limited to the embodiment(s) described herein but can be amended or modified without departing from the scope of the present invention.

## Claims

1. A partition (12,14,16) for an animal stall comprising an upper rail (22) and a lower rail (24), said upper and lower rails being linked at outer ends thereof to define a loop, wherein at least a portion (40) of the lower rail (24) is formed from a non-metallic material, the remainder of the partition other than said non-metallic portion (40) being formed from a metallic material, said non-metallic material comprising a resilient plastic or composite material allowing the lower rail (24) to flex under the weight of an animal, **characterised in that** said non-metallic portion (40) of said lower rail (24) comprises a tubular member having ends arranged in telescopically overlapping engagement with adjoining portions of the remainder of the partition (12,14,16), said adjoining portions of the remainder of the partition comprising reduced diameter portions such that the non-metallic portion (40) can fit over said adjoining portions.

2. A partition as claimed in claim 1, wherein the upper rail (22) and portions of the lower rail (24) adjoining said non-metallic portion (40) are formed from a metallic material.

3. A partition as claimed in claim 1 or claim 2, wherein said non-metallic material may comprise high density polyethylene or a composite material, such as fibre reinforced plastic.

4. A partition as claimed in any preceding claim, wherein one or both of the ends of said non-metallic portion (40) are substantially free to slide with respect to the respective adjoining portions of the partition (12,14,16).

5. A partition as claimed in any of preceding claim, wherein means are provided for adjusting the overlap between one or both ends of the non-metallic portion (40) and the adjoining portions of the partition to adjust the shape and/or position of the lower rail of the partition.

6. A partition as claimed in claim 5, wherein said adjusting means comprises an elongate slot (246) in at least one end region of said non-metallic portion (40) and at least one aperture provided in an adjoining portion of the partition, a fastener (242) being inserted through said slot (246) into said at least one aperture to secure said non-metallic portion (40) to said adjoining portion of the partition.

7. A partition as claimed in any preceding claim, wherein inner ends of said upper and lower rails (332,336) are mounted on a substantially upright support post (330) whereby the vertical spacing between said upper and lower rails may be adjusted by virtue of the flexibility of said non-metallic portion (40) of said lower rail (336).

8. A partition as claimed in claim 7, wherein said inner ends of said upper and lower rails are mounted on said upright support post via respective clamp members (320,328), wherein the vertical position of said clamp members (320,328) on said support post (330) may be adjusted to adjust the height and spacing of said upper and lower support rails.

9. A row of animal stalls defined between partitions, each partition being in accordance with any of claims 1 to 8, said partitions being supported by a common elongate support member (450,550) extending transverse to said plurality of partitions, said at least one elongate support member (450,550) being supported by at least one upright support element (430,552,554).

10. A row of animal stalls as claimed in claim 9, wherein said elongate support member comprises a horizontally extending support beam (550).

11. A row of animal stalls as claimed in claim 9 or claim 10, wherein said elongate support member (550) is supported between two or more spaced apart upright support elements (552,554).

12. A row of animal stalls as claimed in any of claims 9 to 11, wherein said partitions may be axially displaceable along said elongate support member (550) to adjust the width of the stalls defined between adjacent partitions.

## Patentansprüche

1. Trennwand (12, 14, 16) für einen Tierstall, die eine obere Schiene (22) und eine untere Schiene (24) umfasst, wobei die obere und die untere Schiene an äußeren Enden davon verbunden sind, um eine Schleife zu definieren, wobei mindestens ein Abschnitt (40) der unteren Schiene (24) aus einem nichtmetallischen Material gebildet ist, wobei der Rest der Trennwand, der sich von dem nichtmetallischen Abschnitt (40) unterscheidet, aus einem metallischen Material gebildet ist, wobei das nichtmetallische Material einen elastischen Kunststoff oder ein elastisches Verbundmaterial umfasst, das ermöglicht, dass sich die untere Schiene (24) unter dem Gewicht eines Tieres biegen kann, **dadurch gekennzeichnet, dass** der nichtmetallische Abschnitt (40) der unteren Schiene (24) ein röhrenförmiges Element mit Enden umfasst, die in einem teleskopartig überlappenden Eingriff mit benachbarten Abschnitten des Rests der Trennwand (12, 14, 16) angeordnet sind, wobei die benachbarten Abschnitte des Rests der Trennwand Abschnitte mit geringerem Durchmesser umfassen, so dass der nichtmetallische Abschnitt (40) über die benachbarten Abschnitte passen kann.

2. Trennwand nach Anspruch 1, wobei die obere Schiene (22) und Abschnitte der unteren Schiene (24) benachbart dem nichtmetallischen Abschnitt (40) aus einem metallischen Material gebildet sind.

3. Trennwand nach Anspruch 1 oder Anspruch 2, wobei das nichtmetallische Material hochdichtes Polyethylen oder ein Verbundmaterial, wie z. B. faserverstärkten Kunststoff, umfassen kann.

4. Trennwand nach einem der vorhergehenden Ansprüche, wobei ein oder beide Enden des nichtmetallischen Abschnitts (40) in Bezug auf die jeweils benachbarten Abschnitte der Trennwand (12, 14, 16) im Wesentlichen frei gleiten können.

5. Trennwand nach einem der vorhergehenden Ansprüche, wobei Mittel zum Einstellen der Überlappung zwischen einem oder beiden Enden des nichtmetallischen Abschnitts (40) und den benachbarten Abschnitten der Trennwand bereitgestellt sind, um die Form und/oder Position der unteren Schiene der Trennwand einzustellen.

6. Trennwand nach Anspruch 5, wobei das Einstellmittel Folgendes umfasst: einen länglichen Schlitz (246) in mindestens einem Endbereich des nichtmetallischen Abschnitts (40) und mindestens eine Öffnung, die in einem benachbarten Abschnitt der Trennwand vorgesehen ist, wobei ein Befestigungselement (242) durch den Schlitz (246) in die mindestens eine Öffnung eingeführt wird, um den nichtmetallischen Abschnitt (40) an dem benachbarten Abschnitt der Trennwand zu befestigen.

7. Trennwand nach einem der vorhergehenden Ansprüche, wobei innere Enden der oberen und unteren Schiene (332, 336) an einem im Wesentlichen aufrechten Tragpfosten (330) angebracht sind, wodurch der vertikale Abstand zwischen der oberen und unteren Schiene durch die Flexibilität des nichtmetallischen Abschnitts (40) der unteren Schiene (336) eingestellt werden kann.

8. Trennwand nach Anspruch 7, wobei die inneren Enden der oberen und unteren Schiene an dem aufrechten Tragpfosten mit Hilfe jeweiliger Klemmelemente (320, 328) angebracht sind, wobei die vertikale Position der Klemmelemente (320, 328) an dem Tragpfosten (330) eingestellt werden kann, um die Höhe und den Abstand der oberen und unteren Tragschiene einzustellen.

9. Reihe von Tierställen, die zwischen Trennwänden definiert sind, wobei jede Trennwand einem der Ansprüche 1 bis 8 entspricht, wobei die Trennwände von einem gemeinsamen länglichen Stützelement (450, 550) gestützt werden, das sich quer zu den mehreren Trennwänden erstreckt, wobei das mindestens eine längliche Stützelement (450, 550) von mindestens einem aufrechten Stützelement (430, 552, 554) gestützt wird.

10. Reihe von Tierställen nach Anspruch 9, wobei das längliche Stützelement einen sich horizontal erstreckenden Stützträger (550) umfasst.

11. Reihe von Tierställen nach Anspruch 9 oder Anspruch 10, wobei das längliche Stützelement (550) zwischen zwei oder mehreren voneinander beabstandeten aufrechten Stützelementen (552, 554) gestützt wird.

12. Reihe von Tierställen nach einem der Ansprüche 9 bis 11, wobei die Trennwände entlang des länglichen Stützelements (550) axial verlagert werden können, um die Breite der Ställe einzustellen, die zwischen benachbarten Trennwänden definiert sind.

## Revendications

1. Élément séparateur (12, 14, 16) pour une stalle d'animal comportant un rail supérieur (22) et un rail inférieur (24), lesdits rails supérieur et inférieur étant reliés au niveau d'extrémités extérieures de ceux-ci pour définir une boucle, dans lequel au moins une partie (40) du rail inférieur (24) est formée à partir d'un matériau non métallique, le reste de l'élément séparateur autre que ladite partie non métallique (40) étant formé à partir d'un matériau métallique, ledit matériau non métallique comportant un matériau composite ou plastique élastique permettant au rail inférieur (24) de fléchir sous le poids d'un animal, **caractérisé en ce que** ladite partie non métallique (40) dudit rail inférieur (24) comporte un élément tubulaire ayant des extrémités agencées selon une mise en prise se chevauchant de manière télescopique avec des parties contiguës du reste de l'élément séparateur (12, 14, 16), lesdites parties contiguës du reste de l'élément séparateur comportant des parties au diamètre réduit de telle sorte que la partie non métallique (40) peut s'adapter sur lesdites parties contiguës.

2. Élément séparateur selon la revendication 1, dans lequel le rail supérieur (22) et des parties du rail inférieur (24) contigus par rapport à ladite partie non métallique (40) sont formés à partir d'un matériau métallique.

3. Élément séparateur selon la revendication 1 ou la revendication 2, dans lequel ledit matériau non métallique peut comporter du polyéthylène haute densité ou un matériau composite, tel du plastique renforcé par des fibres.

4. Élément séparateur selon l'une quelconque des revendications précédentes, dans lequel l'une ou les deux parmi les extrémités de ladite partie non métallique (40) sont sensiblement libres de coulisser par rapport aux parties contiguës respectives de l'élément séparateur (12, 14, 16).

5. Élément séparateur selon l'une quelconque des revendications précédentes, dans lequel un moyen est mis en oeuvre pour ajuster le chevauchement entre l'une ou les deux extrémités de la partie non métallique (40) et les parties contiguës de l'élément séparateur pour ajuster la forme et/ou la position du rail inférieur de l'élément séparateur.

6. Élément séparateur selon la revendication 5, dans lequel ledit moyen d'ajustement comporte une fente allongée (246) dans au moins une région d'extrémité de ladite partie non métallique (40) et au moins une ouverture mise en oeuvre dans une partie contiguë de l'élément séparateur, un élément de fixation (242) étant inséré au travers de ladite fente (246) jusque dans ladite au moins une ouverture pour assujettir ladite partie non métallique (40) au niveau de ladite partie contiguë de l'élément séparateur.

7. Élément séparateur selon l'une quelconque des revendications précédentes, dans lequel des extrémités intérieures desdits rails supérieur et inférieur (332, 336) sont montées sur un montant de support sensiblement vertical (330) ce par quoi l'espacement vertical entre lesdits rails supérieur et inférieur peut être ajusté en raison de la flexibilité de ladite partie non métallique (40) dudit rail inférieur (336).

8. Élément séparateur selon la revendication 7, dans lequel lesdites extrémités intérieures desdits rails supérieur et inférieur sont montées sur ledit montant de support vertical par le biais d'éléments de serrage respectifs (320, 328), dans lequel la position verticale desdits éléments de serrage (320, 328) sur ledit montant de support (330) peut être ajustée pour ajuster la hauteur et l'espacement desdits rails de support supérieur et inférieur.

9. Rangée de stalles d'animaux définies entre des éléments séparateurs, chaque élément séparateur étant selon l'une quelconque des revendications 1 à 8, lesdits éléments séparateurs étant supportés par un élément de support allongé commun (450, 550) s'étendant de manière transversale par rapport à ladite pluralité d'éléments séparateurs, ledit au moins un élément de support allongé (450, 550) étant supporté par au moins un élément de support vertical (430, 552, 554).

10. Rangée de stalles d'animaux selon la revendication 9, dans laquelle ledit élément de support allongé comporte une poutre de support s'étendant à l'horizontale (550).

11. Rangée de stalles d'animaux selon la revendication 9 ou la revendication 10, dans laquelle ledit élément de support allongé (550) est supporté entre deux ou plusieurs éléments de support verticaux espacés l'un par rapport à l'autre (552, 554).

12. Rangée de stalles d'animaux selon l'une quelconque des revendications 9 à 11, dans laquelle lesdits éléments séparateurs peuvent être déplacés dans le sens axial le long dudit élément de support allongé (550) pour ajuster la largeur des stalles définies entre des éléments séparateurs adjacents.
